# EUROPEAN PATENT SPECIFICATION

(11) **EP 2 325 086 B1**
(45) Date of publication and mention of the grant of the patent: **23.05.2012**
(21) Application number: 10188326.2
(22) Date of filing: 21.10.2010
(51) Int. Cl.: B64G 1/64

(54) **Zero-shock separation system**
Schockfreies Trennsystem
Système de séparation de choc zéro

(30) Priority: 18.11.2009 EP 09176309
(43) Date of publication of application: 25.05.2011
(73) Proprietor: RUAG Schweiz AG, 8052 Zürich (CH)
(72) Inventor: Straumann, Franz, 8353, Elgg (CH); Von Arx, Richard, 8610, Uster (CH)
(74) Representative: OK pat AG

(56) References cited:
- EP-A1- 1 944 237
- EP-A2- 1 361 411
- WO-A1-95/15475

## Description

### FIELD OF THE INVENTION

The present invention relates to a zero-shock separation system for a launch vehicle or spacecraft for releasably connecting a first body with a second body, especially for connecting a payload fairing to the body of a launch vehicle or spacecraft.

### BACKGROUND OF THE INVENTION

It is a common requirement for spacecrafts that two bodies, also called stages have to be releasably connected to each other. Due to the extreme conditions during takeoff and flight, these connections have to be extremely stable but at the same time a quick and reliable separation of the two bodies has to be ensured.

In known separation systems, the first body, e.g. the payload fairing is connected to the second body, e.g. the body of the launch vehicle or spacecraft by the use of a pre-tensioned belt which is released/ cut/ disengaged when release of the first body from the second body is needed. European patent application EP 1 944 237 discloses such a device which employs the elastic force of elastic elements for initiating the release. This release is usually initiated once the launch vehicle or payload has reached a predetermined altitude/ orbit.

However, when such a pre-tensioned belt is suddenly released/ cut / disengaged, a strong, undesirable shock arises which is transmitted to the launch vehicle or payload. Such a shock can be dangerous since it might affect the integrity or the trajectory of the launch vehicle or payload. European patent application EP 1 361 411 discloses such a separation system where a pyrotechnic device initiates the disengagement, causing a sudden undesirable shock.

Furthermore, due to the size of the two bodies that needs to be releasably connected, the pre-tensioning of the belt, as it is conventionally done, might prove to be a difficult task. Additionally, said tension in the belt might even cause an undesirable deformation of one of the two bodies.

### TECHNICAL PROBLEM TO BE SOLVED

The objective of the present invention is thus to eliminate these disadvantages and to provide a system for a launch vehicle or spacecraft for releasably connecting a first body with a second body wherein the separation of the two bodies can be initiated without causing a shock. A further objective of the present invention is to eliminate the difficult step of pre-tension the belt during connection of the two bodies. An even further objective of the present invention is to ensure that neither of the two bodies connected suffers a deformation due to the connection.

### SUMMARY OF THE INVENTION

The above-identified objective of the present invention is solved by a system for a launch vehicle or spacecraft for releasably connecting a first body with a first interface and a second body with a second matching interface, said system comprising: a belt for releasably securing said first body to said second body, a circumferential trench at said second interface for receiving at least a circumferential portion of said belt in order to provide for a fixation of said circumferential portion of said belt with relation to said second body, further comprising mechanical fixation means attaching said circumferential portion of said belt to a circumference of said first body, said mechanical fixation means being provided to enable a circumferential shifting movement of said circumferential portion of said belt with respect to said circumference of said first body in order to initiate a separation of the first body from the second body, said circumferential shifting movement inducing a relative movement of said circumferential portion of said belt with respect to said circumference of said first body in order to remove said circumferential portion of said belt from said trench, and comprising a releasing mechanism causing said circumferential shifting movement.

The above-identified objective of the present invention is also solved by a method for a launch vehicle or spacecraft for releasably connecting a first body with a first interface and a second body with a second matching interface, the method comprising the steps of: providing a belt for releasably securing said first body to said second body; providing a circumferential trench at said second interface for receiving at least a portion of said belt in order to provide for a fixation of said portion of said belt with relation to said second body; attaching said portion of said belt to a circumference of said first body by mechanical fixation means; causing a circumferential shifting movement of said portion of said belt with respect to said circumference of said first body in order to initiate a separation of the first body from the second body, by means of a releasing mechanism; wherein said circumferential shifting movement induces a relative movement of said portion of said belt with respect to said circumference of said first body in order to axially remove said portion of said belt from said trench.

### ADVANTAGEOUS EFFECTS

In view of the drawbacks of the prior art, the objective of the present invention and the inventive solution summarized above, the present invention has the main advantage that the separation of the two bodies can be initiated in a smooth way, without a shock or sudden vibration and without the need of pre-tensioning the belt.

A further advantage of the present invention is that the assembly/ connection of the two bodies is significantly simplified by elimination of the difficult step of pre-tensioning the belt.

An even further advantage of the present invention is that deformation of either of the two bodies due to the connection is excluded.

### BRIEF DESCRIPTION OF THE DRAWINGS

Further characteristics and advantages of the invention will in the following be described in detail by means of the description and by making reference to the drawings. Which show:
- Fig. 1: is a schematic perspective diagram, depicting a first embodiment the system of the present invention, wherein the first body and the second body are coaxially arranged one around the other and the belt is axially received in said circumferential trench for a radial fixation with relation to the second body and wherein said induced relative movement of the belt is an axial movement;
- Fig. 2: is a schematic cross-section of the first embodiment the system of the present invention along line A-A' on figure 1;
- Fig. 3A-3C: are a sequence of schematic cross sections of the first embodiment the system of the present invention along line B- B' on figure 2, depicting the steps of:

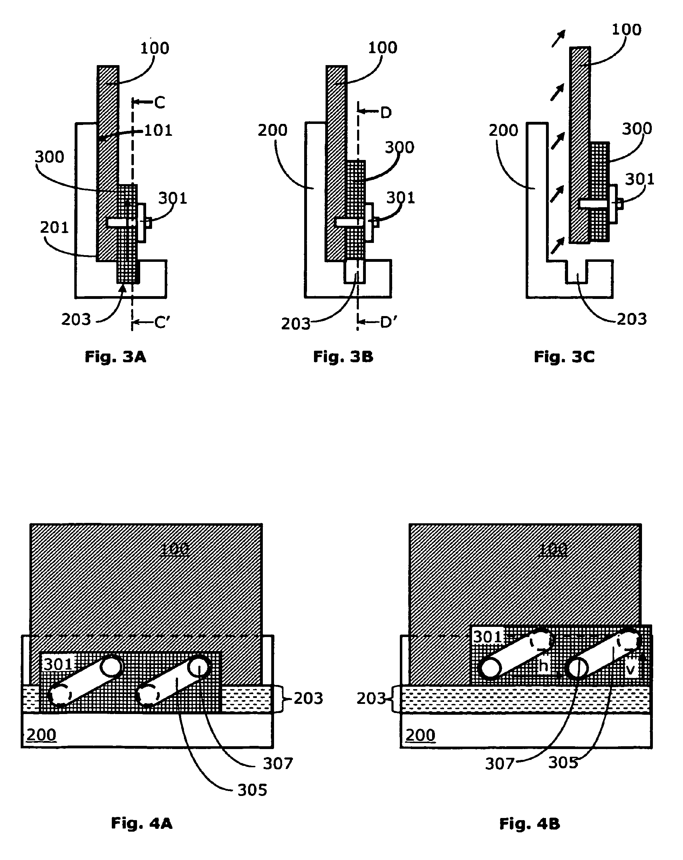

Fig. 3A: connection of the two bodies;
Fig. 3B: initiation of the separation;
Fig. 3C: separation of the two bodies;
- Fig. 4A: Cross section of the first embodiment the system of the present invention along the line C-C' on figure 3A, depicting details of the mechanical fixation means while the two bodies are connected;
- Fig. 4B: Cross section of the first embodiment the system of the present invention along the line D-D' on figure 3B, depicting details.of the mechanical fixation means at the initiation of the separation;

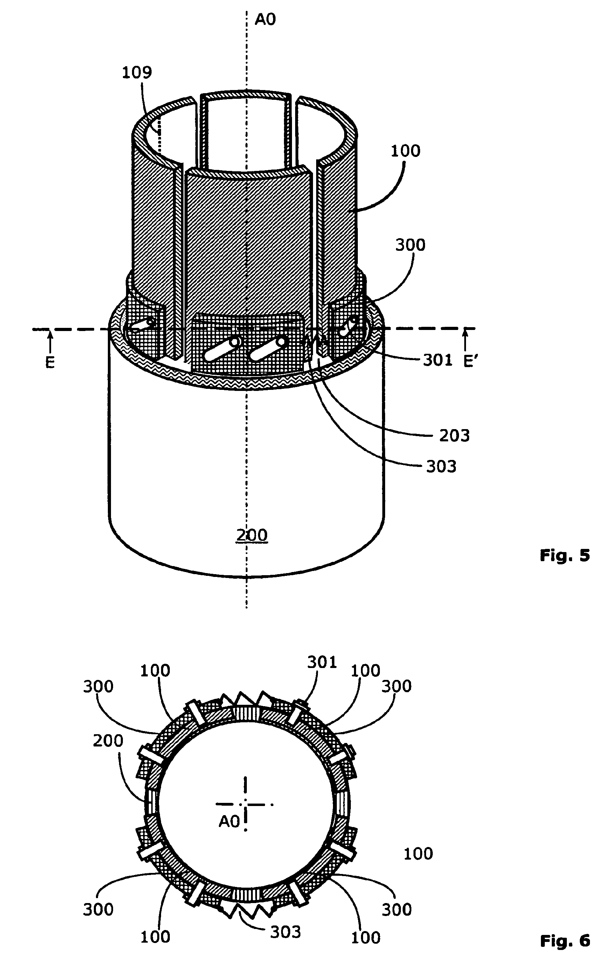

- Fig. 5: is a schematic perspective diagram, depicting a second embodiment the system of the present invention, wherein multiple first bodies are connected to the second body by a multitude of belts and corresponding multitude of mechanical fixation means;
- Fig. 6: is a schematic cross-section of the second embodiment the system of the present invention along line E-E' on figure 5;

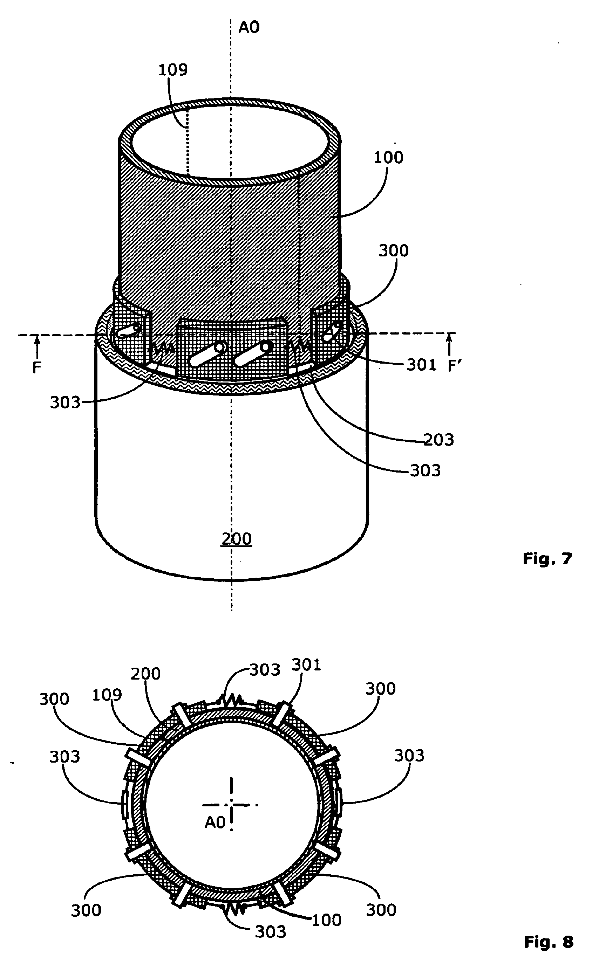

- Fig. 7: is a schematic perspective diagram, depicting a third embodiment the system of the present invention, wherein a single first body is connected to the second body by a multitude of belts and corresponding multitude of mechanical fixation means;
- Fig. 8: is a schematic cross-section of the third embodiment the system of the present invention along line F-F' on figure 7;

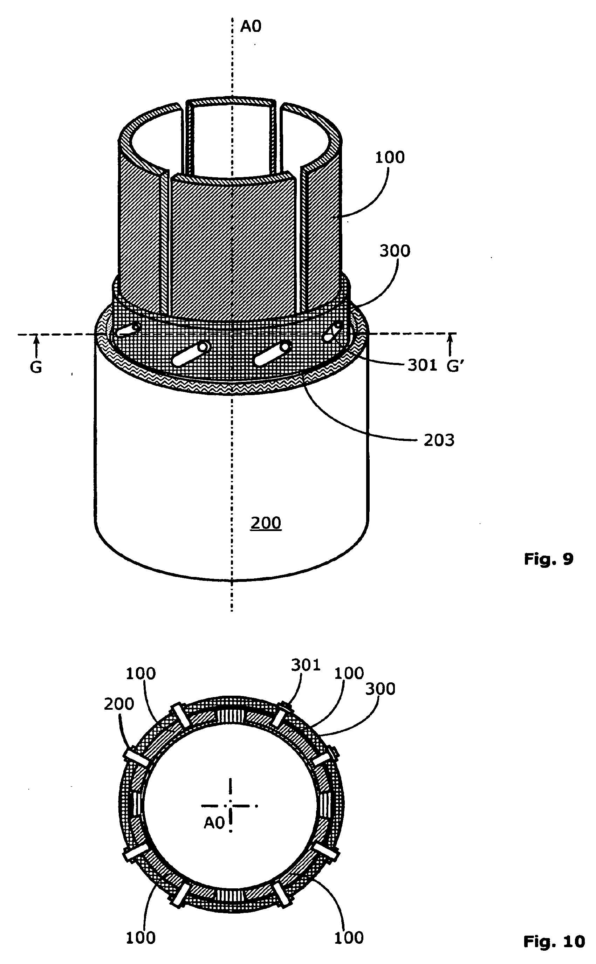

- Fig. 9: is a schematic perspective diagram, depicting a fourth embodiment the system of the present invention, wherein multiple first bodies are connected to the second body by a single belt and a corresponding mechanical fixation means;
- Fig. 10: is a schematic cross-section of the fourth embodiment the system of the present invention along line G-G' on figure 9;

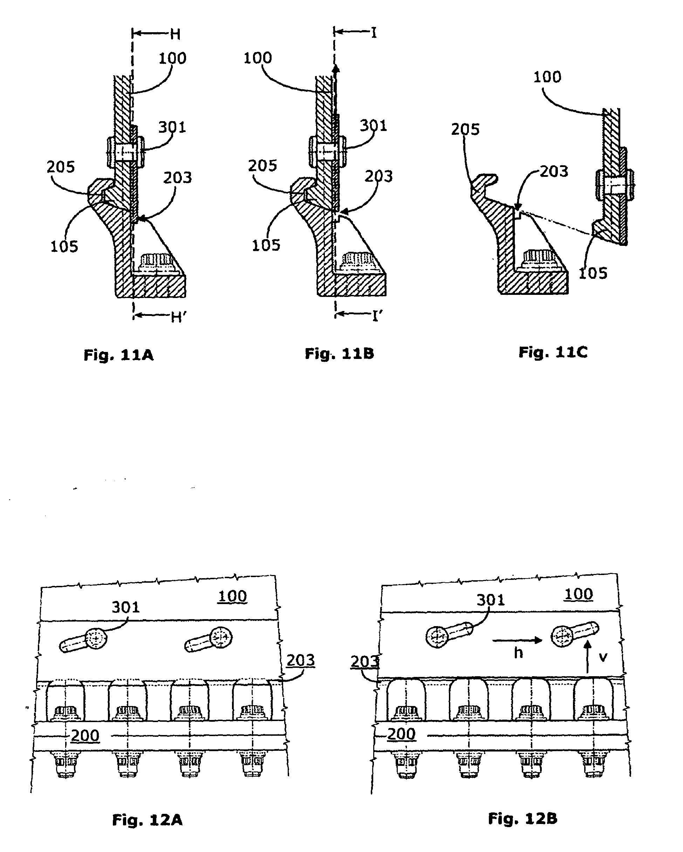

- Fig. 11A-11C: are a sequence of schematic cross sections of preferred embodiment the system of the present invention, depicting details of the first interface and the second interface comprising first retention means and second retention means, in the steps of:
Fig. 11A: connection of the two bodies;
Fig. 11B: initiation of the separation;
Fig. 11C: separation of the two bodies;
- Fig. 12A: is a cross section of the preferred embodiment the system of the present invention along the line H-H' on figure 11A, depicting details of the mechanical fixation means while the two bodies are connected;
- Fig. 12B: is a cross section of the preferred embodiment of the system of the present invention along the line I-I' on figure 11B, depicting details of the mechanical fixation means at the initiation of the separation;

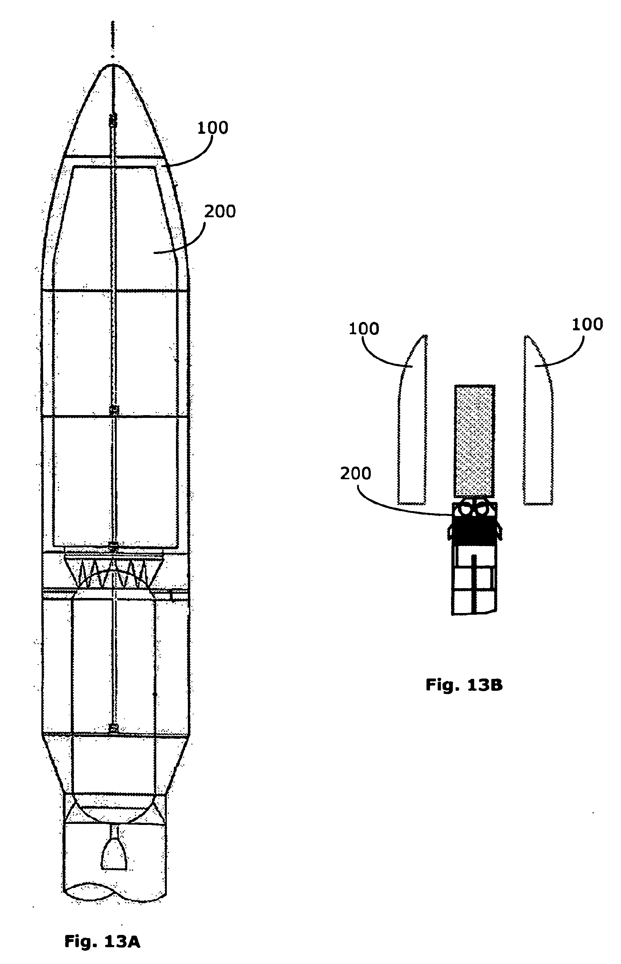

- Fig. 13A: is a schematic side view of a launch vehicle or spacecraft wherein a payload fairing is connected with the launch vehicle or spacecraft by means of a system according to the present invention while the two are connected;
- Fig. 13B: is a schematic side view of a launch vehicle or spacecraft wherein a payload fairing is connected with the launch vehicle or spacecraft by means of a system according to the present invention at the separation stage;

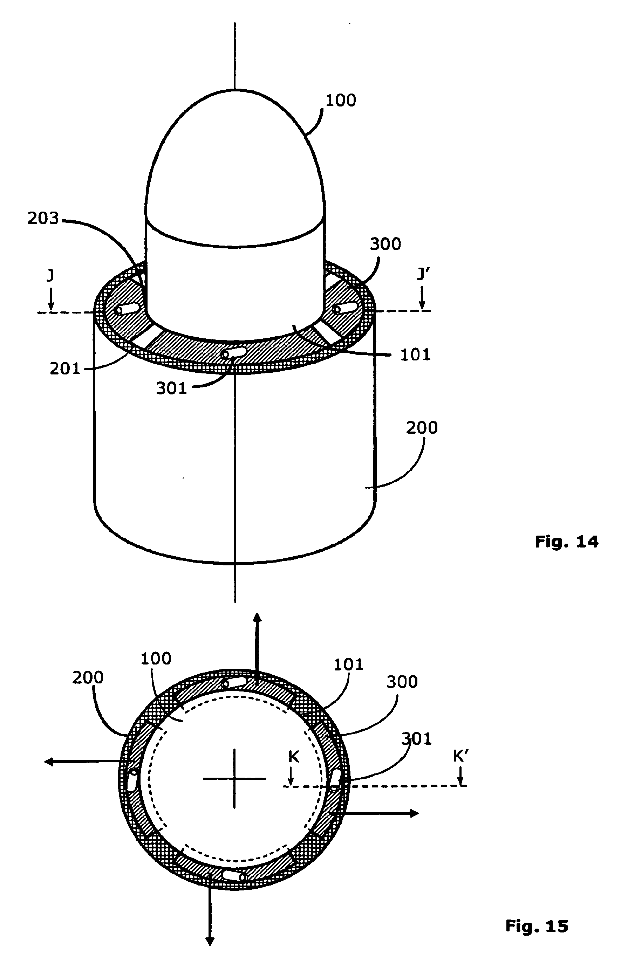

- Fig. 14: is a schematic perspective diagram, depicting a further embodiment the system of the present invention, wherein the first body and the second body are coaxially arranged one above / on top of the other and the belt is radially received in said circumferential trench for an axial fixation with relation to the second body and wherein said induced relative movement of the belt is a radial movement;
- Fig. 15: is a schematic cross-section of the further embodiment of the system of the present invention along line J-J' on figure 14; and

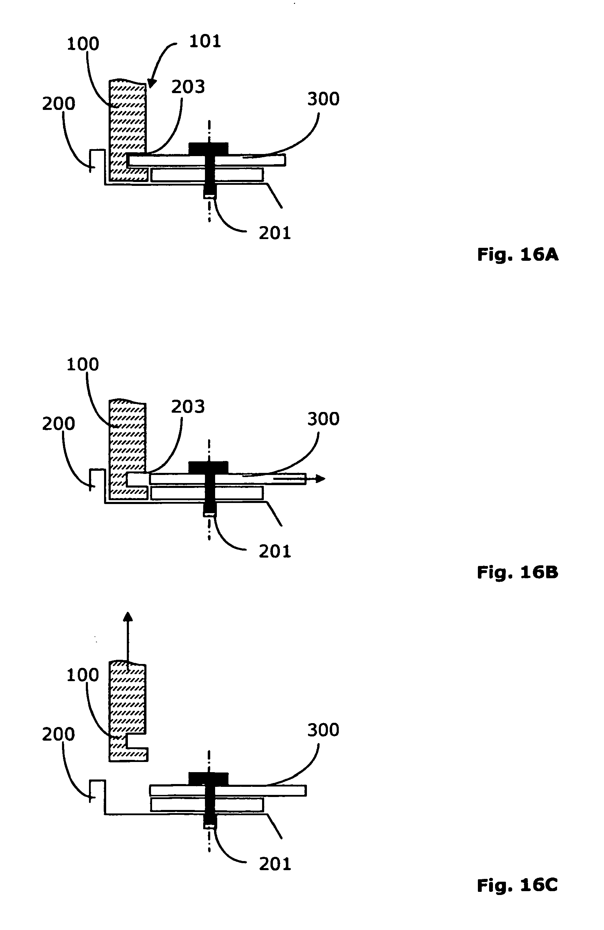

- Fig. 16A-16C: are a sequence of schematic cross sections of the further embodiment of the system of the present invention along line K-K' on figure 15, depicting the steps of:
Fig. 16A: connection of the two bodies;
Fig. 16B: initiation of the separation;
Fig. 16C: separation of the two bodies.
It shall be noted that the figures are not drawn to scale and that certain details have been drawn out of scale for clarity.

### DESCRIPTION OF THE PREFERRED EMBODIMENTS

Certain terms will be used in this patent application, the formulation of which should not be interpreted to be limited by the specific term chosen, but as to relate to the general concept behind the specific term.

The terms launch vehicle or spacecraft shall mean in the context of the present invention any type of launch vehicle or spacecraft such as a rocket, space-ship or space-station. When referring to a belt, any kind of longitudinal fixation means shall be understood which may act as a circumferential fixation. The term belt shall not be limited to a fully closed circumference.

The term trench shall be used with the meaning of any kind of groove, cut, or any long narrow furrow or channel. The term interface and corresponding matching interface shall be used to refer to a pair of form fitted segments having matching profiles.

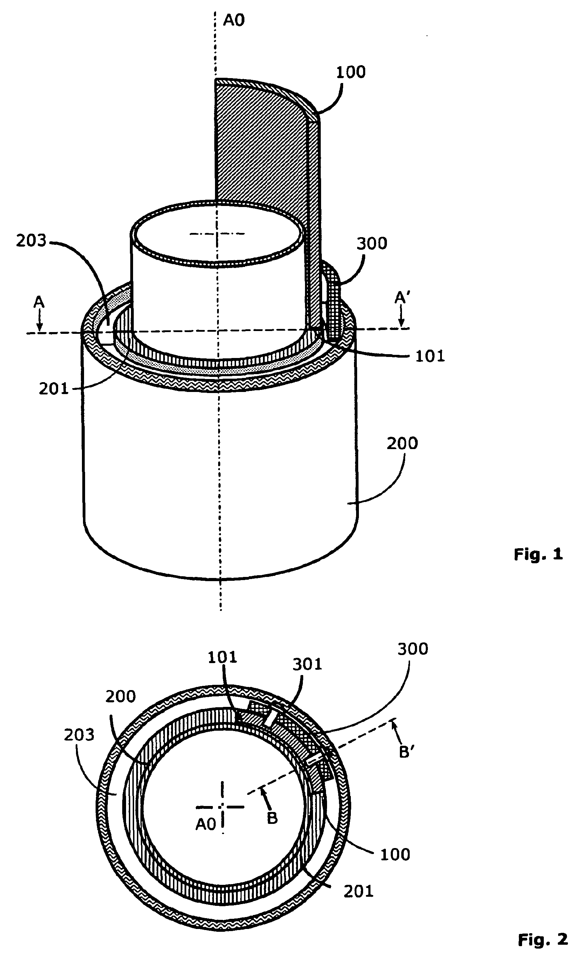

Fig. 1 shows a schematic perspective diagram, depicting a first embodiment the system of the present invention. A first body 100, here a circumferential quarter segment of a cylinder, with a first interface 101 is connected with a second interface 201 of a second body 200, here a cylindrical body. In this embodiment of the invention, the first body and the second body are coaxially arranged one around the other. The second interface 201 of the second body 200 is further provided with a circumferential trench 203 for axially receiving, preferably along a common longitudinal axis A0 of the first body 100 and the second body 200, at least a circumferential portion of the belt 300. When said circumferential portion of the belt 300 is received in the circumferential trench 203, a radial fixation of the belt 300 with relation to the second body 200 is achieved. As seen on figure 1, the belt 300 surrounds, at least partially, the first body 100 and thus when it is radially fixed with respect to the second body 200 it provides a corresponding radial fixation of the first body 100 with respect to the second body 200 too.

Figure 2 depicts a cross-section of the first embodiment the system of the present invention along line A-A' on figure 1. The arrangement of the first body 100 around a circumferential segment of the second body 200 is clearly shown here. The belt 300, fixed within the circumferential trench 203, surrounds at least partially the first body 100 and is fixed thereto by mechanical fixation means 301. These mechanical fixation means 301 attach a circumferential portion of the belt 300 to a circumference of the first body 100.

Figures 3A to 3C depict a sequence of schematic cross sections of the first embodiment the system of the present invention along line B-B' on figure 2.

Figure 3A shows the system of the present invention when the first body 100 is connected to the second body 200 by means of the belt 300 being radially fixed in the circumferential trench 203. By a corresponding profile of the circumferential trench 203, a radial dislocation of the belt 300 from the circumferential trench 203 is prevented. Thus, the first body 100 is radially fixed with respect to the second body 200.

Figure 3B shows the system of the present invention when the separation of the first body 100 from the second body 200 has been initiated by inducing an axial movement of said circumferential portion of said belt 300 with respect to said circumference of said first body 100 in order to axially remove said circumferential portion of said belt 300 from said circumferential trench 203. Thus, as seen on this figure 3C, once belt 300 is not retained anymore in the circumferential trench 203, the first body 100, with the belt 300 attached is free to radially separate from the second body 200.

Figure 4A shows a cross section of the first embodiment the system of the present invention along the line C-C' on figure 3A, depicting details of the mechanical fixation means 301 while the first body 100 is connected to the second body 200 and said belt 300 is received in the circumferential trench 203. In the depicted embodiment, the mechanical fixation means 301 comprises at least a pair of one elongated and inclined hole 305 and a bolt 307.

Figure 4B depicts a cross section of the first embodiment the system of the present invention along the line D-D' on figure 3B, depicting details of the mechanical fixation means 301 at the initiation of the separation of the first body 100 from the second body 200, showing the collaboration of the bolt 307 with the elongated and inclined hole 305 so that a circumferential shifting movement indicated by arrow h induces an axial movement indicated by arrow v. The circumferential shifting movement indicated by arrow h will lead to the belt 300 being removed from the circumferential trench 203, releasing it from the radial fixation enforced by the circumferential trench 203, allowing the first body 100 to separate from the second body 200.

However, other suitable fixation means 301 can be used to cause the release of the belt 300 from the circumferential trench 203. Such as electronically or pyrotechnically initiated separators as known in the art.

Figure 5 is a schematic perspective diagram, depicting a second embodiment the system of the present invention, wherein multiple first bodies 100 are connected to the second body by a multitude of belts 300 and corresponding multitude of mechanical fixation means 301. The four segmented first bodies 100 are preferably symetrical. The concept of radial fixation by means of the belt 300 being received in a circumferential trench 203 described in relation with the first embodiment apply in this embodiment as well to each individual first body 100 and corresponding belts 300, each with corresponding multitude of mechanical fixation means 301. It is to be pointed out that the although figure 5 shows a one-to-one relation between the number of belts 300 and the number of first bodies 100, this is not a requirement of the present invention, as multiple first bodies 100 may be fixed with a single belt 300 and multiple belts 300 could be employed for fixing a single first body 100.

Figure 6 represents a schematic cross-section of the second embodiment the system of the present invention along line E-E' on figure 5 wherein multiple first bodies 100 are connected to the second body by a multitude of belts 300 and corresponding multitude of mechanical fixation means 301.

Figure 7 is a schematic perspective diagram, depicting a third embodiment the system of the present invention, wherein a single first body 100 is connected to the second body 200 by a multitude of belts 300 and corresponding multitude of mechanical fixation means. Furthermore, figure 7 shows a pair of separation means 109 for allowing said first body 100 to separate into segments, two halves in the depicted examples. The separation means 109 are of the type known in the art, such as explosive charges, tension initiated separators, releasable joints, heat dissolved adhesives, etc.

Also shown on figure 7 are releasing mechanisms 303 provided for circumferentially connecting adjacent belts 300. These releasing mechanisms 303 have two functions:
- initiating a circumferential shifting movement of the belt 300 in order to initiate the separation of the first body 100 from the second body 200;
- in a preferred embodiment of the present invention, the releasing mechanisms 303 also allows two adjacent circumferential portions of the belt 300 to be releasably joint. As the separation of the first body 100 from the second body 200 is initiated the releasing mechanisms 303 disconnect said adjacent circumferential portions of the belt 300, allowing the later to separate.

Fig 8 shows a schematic cross-section of the third embodiment the system of the present invention along line F-F' on figure 7, also depicting the circumferential arrangement of multiple belts 300 connected by corresponding releasing mechanisms 303. As shown here, the releasing mechanism 303 may be a releasable tensioned spring, or some other remotely activateable release mechanism forcing the corresponding circumferential portions of the belt 300 in a circumferential shifting movement to initiate the separation of the first body 100 from the second body 200 and optionally to allow separation of adjacent circumferential portions of the belt 300, or of separate adjacent belts 300.

Figure 9 is a schematic perspective diagram depicting a fourth embodiment the system of the present invention, wherein multiple first bodies 100 are connected to the second body 200 by a single belt 300 and corresponding mechanical fixation means 301. The concept of radial fixation by means of the belt 300 being received in a circumferential trench 203 described in relation with the first embodiment apply in this embodiment as well to each individual first body 100 fixed by a single belt 300, with corresponding mechanical fixation means 301.

Figure 10 shows schematic cross-section of the fourth embodiment the system of the present invention along line G-G' on figure 9 depicting the arrangement of multiple first bodies 100 connected to the second body 200 by a single belt 300.

The sequence of figures 11A to 11C show schematic cross sections of a preferred embodiment the system of the present invention, depicting details of the first interface and the second interface comprising first axial retention means 105 and second axial retention means 205 respectively. As seen on this sequence of figures, the first axial retention means 105 and the second axial retention means 205 are a pair of matching profiles of the first interface 101 and the second interface 201, wherein this matching profile is designed such, that it prevents an axial dislocation of the first body 100 with respect to the second body 200 when the first body 100 is radially fixed with respect to the second body 200. In the preferred embodiment shown on figures 11A to 11C, the first axial retention means 105 and second axial retention means 205 are a pair of matching ear and plug arrangement of the profiles of the first interface 101 and the second interface 201, wherein the first axial retention means 105 is a radial extension of the first interface 101which is received by the second axial retention means 205 which is a radial cut-out or groove in the second interface 201.

Fig. 11A shows the preferred embodiment of the present invention, wherein the belt 300 and trench 203 arrangement prevents radial dislocation of the first body 100 with respect to the first body 100, and thus the pair of first axial retention means 105 and second axial retention means 205 prevent an axial dislocation.

When the belt 300 is forced by the releasing mechanism 303 (not shown here) out of the circumferential trench 203, as shown on fig. 11B, the prevention of axial dislocation provided by the first axial retention means 105 in combination with the second axial retention means 205 ceases to exist and the first body 100 is free to separate from the second body 200 as shown on figure 11C.

Figure 12A is a cross section of the preferred embodiment the system of the present invention along the line H-H' on figure 11A, depicting details of the mechanical fixation means 301 while the two bodies are connected and said belt 300 is received in the circumferential trench 203. In the depicted embodiment, the mechanical fixation means 301 comprises at least a pair of one elongated and inclined hole 305 and a bolt 307.

Figure 12B shows a cross section of the preferred embodiment the system of the present invention along the line I-I' on figure 11B, depicting details of the mechanical fixation means 301 at the initiation of the separation, showing the collaboration of the bolt 307 with the elongated and inclined hole 305 so that a circumferential shifting movement indicated by arrow h induces an axial movement indicated by arrow v. The circumferential shifting movement indicated by arrow h will lead to the belt 300 being removed from the circumferential trench 203, releasing it from the radial fixation enforced by the circumferential trench 203, allowing the first body 100 to separate from the second body 200.

Figure 13A is a schematic side view of a launch vehicle or spacecraft wherein a payload fairing, corresponding to the first body 100, is connected with the launch vehicle or spacecraft, corresponding to the second body 200, by means of a system according to the present.

Figure 13B shows a schematic side view of the launch vehicle or spacecraft depicted on figure 13A at the separation stage, when the payload fairing, corresponding to the first body 100, separates from the launch vehicle or spacecraft, corresponding to the second body 200.

Fig. 14 shows a schematic perspective diagram, depicting a further embodiment the system of the present invention. As opposed to the other embodiments hereinbefore presented, in this embodiment of the present invention, the first body 100 and the second body 200 are coaxially arranged one above / on top of the other and the belt 300 is radially received in said circumferential trench 203 for an axial fixation with relation to the second body 200 and wherein said induced relative movement of the belt 300 is a radial movement.

Furthermore, the present invention can be applied without departing from its inventive concept at any fixation/ release angle not only in the radial respectively axial directions depicted in the drawings. The depicted embodiments are merely examples in some of the more common, axial / radial directions.

A first body 100, for example rocket head, with a first interface 101 is connected with a second interface 201 of a second body 200, here a cylindrical body. The interface 101 of the second body 200 is further provided with a circumferential trench 203 for radially receiving at least a circumferential portion of the belt 300. When said circumferential portion of the belt 300 is received in the circumferential trench 203, an axial fixation of the belt 300 with relation to the second body 200 is achieved. As seen on figure 14, the belt 300 surrounds, at least partially, the first body 100 and thus when it is axially fixed with respect to the second body 200 it provides a corresponding axial fixation of the first body 100 with respect to the second body 200 too.

Figure 15 depicts a cross-section of the embodiment the system of the present invention along line J-J' on figure 14. The arrangement of the first body 100 on top of the second body 200 can be seen here. The belt 300, fixed within the circumferential trench 203, surrounds at least partially the first body 100 and is fixed thereto by mechanical fixation means 301. These mechanical fixation means 301 attach a circumferential portion of the belt 300 to a circumference of the first body 100.

Figures 16A to 16C depict a sequence of schematic cross sections of the embodiment of the system of the present invention along line K-K' on figure 15.

Figure 16A shows the system of the present invention when the first body 100 is connected to the second body 200 by means of the belt 300 being axially fixed in the circumferential trench 203. By a corresponding profile of the circumferential trench 203, an axial dislocation of the belt 300 from the circumferential trench 203 is prevented. Thus, the first body 100 is axially fixed with respect to the second body 200.

Figure 16B shows the system of the present invention when the separation of the first body 100 from the second body 200 has been initiated by inducing a radial movement of said circumferential portion of said belt 300 with respect to said circumference of said first body 100 in order to radially remove said circumferential portion of said belt 300 from said circumferential trench 203. Thus, as seen on this figure 16C, once belt 300 is not retained anymore in the circumferential trench 203, the first body 100 is free to axially separate from the second body 200.

It will be understood that many variations could be adopted based on the specific structure hereinbefore described without departing from the scope of the invention as defined in the following claims.

### REFERENCE LIST:

| | |
|---|---|
| first body | 100 |
| first interface | 101 |
| first axial retention means | 105 |
| separation means | 109 |
| | |
| second body | 200 |
| second interface | 201 |
| circumferential trench | 203 |
| second axial retention means | 205 |
| | |
| belt | 300 |
| mechanical fixation means | 301 |
| releasing mechanism | 303 |
| elongated and inclined hole | 305 |
| bolt | 307 |

## Claims

1. A system for a launch vehicle or spacecraft for releasably connecting a first body (100) with a first interface (101) and a second body (200) with a second matching interface (201), said system comprising:
- said first body (100);
- said second body (200);
- a belt (300) for releasably securing said first body (100) to said second body (200),
- a circumferential trench (203), at said second interface (201), for receiving at least a portion of said belt (300) in order to provide for a fixation of said portion of said belt (300) with relation to said second body (200),
- mechanical fixation means (301) attaching said portion of said belt (300) to a circumference of said first body (100) **characterized in that**: said mechanical fixation means (301) is provided to enable a circumferential shifting movement of said portion of said belt (300) with respect to said circumference of said first body (100) in order to initiate a separation of the first body (100) from the second body (200), wherein
- said circumferential shifting movement induces a relative movement of said portion of said belt (300) with respect to said circumference of said first body (100) in order to remove said portion of said belt (300) from said trench (203), and
- the system further comprising a releasing mechanism (303) causing said circumferential shifting movement.

2. A system according to claim 1, wherein:
- said first body (100) is a circumferentially segmented first body (100);
- said circumferential trench (203) is arranged for axially receiving said portion of said belt (300) in order to provide for a radial fixation of said portion of said belt (300) with relation to said second body (200); and
- said induced movement of said portion of the belt (300) is an axial movement.

3. A system according to claim 1, wherein:
- said circumferential trench (203) is at said first interface (101) for radially receiving said portion of said belt (300) in order to provide for an axial fixation of said portion of said belt (300) with relation to said second body (200); and
- said induced movement of said portion of the belt (300) is a radial movement.

4. A system according to one of the claims 1 to 3, wherein said first interface (101) and said second interface (201) comprise first axial retention means (105) and second axial retention means (205) for preventing axial dislocation of said first body (100) with respect to the second body (200) when said first body (100) is radially fixed to said second body (200) by the belt (300).

5. A system according to one of the claims 1 to 4, wherein a multitude of circumferentially segmented first bodies (100) are connected to the second body (200) by means of a multitude of belts (300) with corresponding multitude of mechanical fixation means (301).

6. A system according to claim 5, wherein adjacent belts (300) are releasably connected by said releasing mechanism (303).

7. A system according to any one of the previous claims, wherein said first body (100) comprises separation means (109) for initiating a separation of the first body (100) into multiple circumferential segments.

8. A launch vehicle or spacecraft comprising a system according to one of the previous claims, wherein said first body (100) is a payload fairing and said second body (200) is part of the spacecraft, itself.

9. A method for a launch vehicle or spacecraft for releasably connecting a first body (100) with a first interface (101) and a second body (200) with a second matching interface (201) comprising the steps of:
- providing a belt (300) for releasably securing said first body (100) to said second body (200);
- providing a circumferential trench (203) at said second interface (201) for receiving at least a portion of said belt (300) in order to provide for a fixation of said portion of said belt (300) with relation to said second body (200);
- attaching said portion of said belt (300) to a circumference of said first body (100) by mechanical fixation means (301); **characterized by**
- causing a circumferential shifting movement of said portion of said belt (300) with respect to said circumference of said first body (100) in order to initiate a separation of the first body (100) from the second body (200), by means of a releasing mechanism (303);
wherein said circumferential shifting movement induces a relative movement of said portion of said belt (300) with respect to said circumference of said first body (100) in order to remove said portion of said belt (300) from said trench (203).

10. A method according to claim 9, wherein:
- said first body (100) is a circumferentially segmented first body (100);
- said circumferential trench (203) is provided for axially receiving said portion of said belt (300) in order to provide for a radial fixation of said portion of said belt (300) with relation to said second body (200);
- said induced movement of said portion of the belt (300) is an axial movement in order to axially remove said portion of said belt (300) from said trench (203).

11. A method according to claim 9, wherein:
- said circumferential trench (203) is at said first interface (101) for radially receiving said portion of said belt (300) in order to provide for an axial fixation of said portion of said belt (300) with relation to said second body (200); and
- said induced movement of said portion of the belt (300) is a radial movement in order to radially remove said portion of said belt (300) from said trench (203).

## Patentansprüche

1. Ein System für eine Trägerrakete oder ein Raumfahrzeug zum lösbaren Verbinden eines ersten Körpers (100) mit einer ersten Schnittstelle (101) an einem zweiten Körper (200) mit einer zweiten, zusammenpassenden Schnittstelle (201), welches System umfasst:
- den ersten Körper (100);
- den zweiten Körper (200);
- ein Band (300) zum lösbaren Befestigen des ersten Körpers (100) an dem zweiten Körper (200),
- einem umlaufenden Einschnitt (203), an der zweiten Schnittstelle (201), zum Aufnehmen von zumindest einem Teil des Bandes (300), um eine Befestigung des Teils des Bandes (300) in Bezug auf den zweiten Körper (200) zu ermöglichen,
- mechanische Befestigungsmittel (301), die den Teil des Bandes (300) an einem Umkreis des ersten Körpers (100) befestigen, **dadurch gekennzeichnet, dass** das mechanische Befestigungsmittel (301) dazu bereitgestellt ist, eine Umlaufverschiebebewegung des Teils des Bandes (300) in Bezug auf den Umkreis des ersten Körpers (100) zu ermöglichen, um eine Trennung des ersten Körpers (100) von dem zweiten Körper (200) herbeizuführen, wobei:
- die Umlaufverschiebebewegung eine Relativbewegung des Teils des Bandes (300) in Bezug auf den Umkreis des ersten Körpers (100) verursacht, um den Teil des Bandes (300) aus dem Einschnitt (203) zu entfernen, und wobei
- das System ferner einen Auslösemechanismus (303) umfasst, der die Umlaufverschiebebewegung verursacht.

2. Ein System nach Anspruch 1, wobei:
- der erste Körper (100) ein in Umkreisrichtung mehrteiliger erster Körper (100) ist,
- der umlaufende Einschnitt (203) zum axialen Aufnehmen des Teils des Bandes (300) angeordnet ist, um eine radiale Befestigung des Teils des Bandes (300) in Bezug auf den zweiten Körper (200) zu ermöglichen; und
- die verursachte Bewegung des Teils des Bandes (300) eine axiale Bewegung ist.

3. Ein System nach Anspruch 1, wobei:
- der umlaufende Einschnitt (203) an der ersten Schnittstelle (101) zum radialen Aufnehmen des Teils des Bandes (300) ist, um eine axiale Befestigung des Teils des Bandes (300) in Bezug den zweiten Körper (200) zu ermöglichen, und
- die verursachte Bewegung des Teils des Bandes (300) eine radiale Bewegung ist.

4. Ein System nach einem der Ansprüche 1 bis 3, wobei die erste Schnittstelle (101) und die zweite Schnittstelle (201) erste Axialrückhaltemittel (105) und zweite Axialrückhaltemittel (205) umfassen zum Verhindern einer axialen Versetzung des ersten Körpers (100) in Bezug auf den zweiten Körper (200), wenn der erste Körper (100) durch das Band (300) an dem zweiten Körper (200) radial befestigt ist.

5. Ein System nach einem der Ansprüche 1 bis 4, wobei eine Vielzahl von in Umfangsrichtung segmentierten ersten Körpern (100) an dem zweiten Körper (200) mittels einer Vielzahl von Bändern (300) mit einer entsprechenden Vielzahl von mechanischen Befestigungsmitteln (301) befestigt ist.

6. Ein System nach Anspruch 5, wobei benachbarte Bänder (300) durch den Auslösemechanismus (303) lösbar verbunden sind.

7. Ein System nach einem der vorhergehenden Ansprüche, wobei der erste Körper (100) Trennungsmittel (109) zum Initiieren einer Trennung des ersten Körpers (100) in mehrere Umfangssegmente umfasst.

8. Eine Trägerrakete oder ein Raumfahrzeug mit einem System nach einem der vorhergehenden Ansprüche, wobei der erste Körper (100) eine Nutzlastverkleidung und der zweite Körper (200) ein Teil des Raumfahrzeugs selbst ist.

9. Ein Verfahren für eine Trägerrakete oder ein Raumfahrzeug zum lösbaren Verbinden eines ersten Körpers (100) mit einer ersten Schnittstelle (101) an einem zweiten Körper (200) mit einer zweiten, zusammenpassenden Schnittstelle (201), mit den folgenden Schritten:
- Bereitstellen eines Bandes (300) zum lösbaren Befestigen des ersten Körpers (100) an dem zweiten Körper (200);
- Bereitstellen eines umlaufenden Einschnitts (203) an der zweiten Schnittstelle (201) zum Aufnehmen von zumindest einem Teil des Bandes (300), um eine Befestigung des Teils des Bandes (300) in Bezug auf den zweiten Körper (200) zu ermöglichen;
- Befestigen des Teils des Bandes (300) an einem Umkreis des ersten Körpers (100) vermittels mechanischer Befestigungsmittel (301), **gekennzeichnet durch**
- Verursachen einer Umlaufverschiebebewegung des ersten Teils des Bandes (300) in Bezug auf den Umkreis des ersten Körpers (100), um eine Trennung des ersten Körpers (100) von dem zweiten Körper (200) vermittels eines Auslösemechanismus (303) herbeizuführen;
wobei die Umlaufverschiebebewegung eine Relativbewegung des Teils des Bandes (300) in Bezug auf den Umkreis des ersten Körpers (100) verursacht, um den Teil des Bandes (300) aus dem Einschnitt (203) zu entfernen.

10. Ein Verfahren nach Anspruch 9, wobei:
- der erste Körper (100) ein in Umkreisrichtung mehrteiliger erster Körper (100) ist;
- der umlaufende Einschnitt (203) zum axialen Aufnehmen des Teils des Bandes (300) bereitgestellt ist, um eine radiale Befestigung des Teils des Bandes (300) in Bezug auf den zweiten Körper (200) zu ermöglichen; und
- die verursachte Bewegung des Teils des Bandes (300) eine axiale Bewegung ist, um den Teil des Bandes (300) aus dem Einschnitt (203) zu entfernen.

11. Ein Verfahren nach Anspruch 9, wobei:
- der umlaufende Einschnitt (203) an der ersten Schnittstelle (101) zum radialen Aufnehmen des Teils des Bandes (300) ist, um eine axiale Befestigung des Teils des Bandes (300) in Bezug den zweiten Körper (200) zu ermöglichen; und
- die verursachte Bewegung des Teils des Bandes (300) eine radiale Bewegung ist, um den Teil des Bandes (300) aus dem Einschnitt (203) radial zu entfernen.

## Revendications

1. Un système pour une fusée de lancement ou un vaisseau spatial pour brancher de façon publiable un premier corps (100) avec une première interface (101) à un deuxième corps (200) avec une deuxième interface (201) assortie, le système comprenant:
- ledit premier corps (100);
- ledit deuxième corps (200);
- une ceinture (300) pour attacher de façon publiable ledit premier corps (100) audit deuxième corps (200),
- une tranchée (203) circonférentielle, sur ladite deuxième interface (201), pour recevoir au moins une partie de la ceinture (300) afin de pourvoir une fixation de ladite partie de la ceinture (300) par rapport audit deuxième corps (200),
- un moyen (301) de fixation mécanique attachant ladite partie de la ceinture (300) à une circonférence dudit premier corps (100), **caractérisé en ce que** ledit moyen (301) de fixation mécanique est pourvu pour permettre un mouvement de déplacement circonférentiel de ladite partie de la ceinture (300) par rapport à la circonférence dudit premier corps (100) afin d'initier une séparation du premier corps (100) du deuxième corps (200), dans lequel:
- ledit mouvement de déplacement circonférentiel induit un mouvement relatif de ladite partie de la ceinture (300) par rapport à ladite circonférence dudit premier corps (100) afin d'enlever ladite partie de la ceinture (300) de ladite tranchée (203) et
- le système comprend en outre un mécanisme (303) déclenchant provoquant ledit mouvement de déplacement circonférentiel.

2. Un système selon la revendication 1, dans lequel:
- le premier corps (100) est un premier corps (100) segmenté dans la direction circonférentielle;
- ladite tranchée (203) circonférentielle est pourvue pour recevoir axialement ladite partie de la ceinture (300) afin de permettre une fixation radiale de ladite partie de la ceinture (300) par rapport au deuxième corps (200); et
- ledit mouvement induit de ladite partie de la ceinture (300) est un mouvement axial.

3. Un système selon la revendication 1, dans lequel:
- ladite tranchée (203) circonférentielle est à la première interface (101) pour recevoir radialement ladite partie de la ceinture (300) afin de permettre une fixation axiale de ladite partie de la ceinture (300) par rapport au deuxième corps (200); et
- ledit mouvement induit de ladite partie de la ceinture (300) est un mouvement radial.

4. Un système selon quelques une des revendications 1 à 3, dans lequel la première interface (101) et la deuxième interface (201) comprennent un premier moyen (105) de rétention et un deuxième moyen (205) de rétention pour empêcher une dislocation axiale dudit premier corps (100) par rapport au deuxième corps (200) quand ledit premier corps est attachée radialement audit deuxième corps (200) par la ceinture (300).

5. Un système selon quelques une des revendications 1 à 4, dans lequel une multitude des premiers corps (100) segmentés dans la direction circonférentielle sont attachés au deuxième corps (200) par le moyen d'une multitude des ceintures (300) par une multitude correspondante des moyens (301) de fixation mécanique.

6. Un système selon la revendication 5, dans lequel des ceintures (300) adjacentes sont branchées de façon publiable par ledit mécanisme (303) déclenchant.

7. Un système selon quelques une des revendications précédentes, dans lequel ledit premier corps (100) comprend des moyens (109) de séparation pour initier une séparation du premier corps (100) dans des segments circonférentiels multiples.

8. Une fusée de lancement ou un vaisseau spatial comprenant un système selon quelques une des revendications précédentes, dans lequel ledit premier corps (100) est un carénage de charge utile et ledit deuxième corps (200) est une partie du vaisseau spatial en soi.

9. Une méthode pour une fusée de lancement ou un vaisseau spatial pour attacher de façon publiable un premier corps (100) avec une première interface (101) à un deuxième corps (200) avec une deuxième interface (201) assortie, la méthode comprenant les étapes suivants:
- pourvoir une ceinture (300) pour attacher de façon publiable ledit premier corps (100) audit deuxième corps (200);
- pourvoir une tranchée (203) circonférentielle à la deuxième interface (201) pour recevoir au moins une partie de ladite ceinture (300) afin de permettre une fixation de ladite partie de ladite ceinture (300) par rapport au deuxième corps (200);
- attacher ladite partie de ladite ceinture (300) à une circonférence dudit premier corps (100) par le moyen des moyens de fixation (301); **caractérisée par**
- provoquer un mouvement de déplacement circonférentiel de ladite partie de la ceinture (300) par rapport à ladite circonférence dudit premier corps (100) afin d'initier une séparation du premier corps (100) du deuxième corps (200) par le moyen d'un mécanisme (303) déclenchant;
dans laquelle le mouvement de déplacement circonférentiel induit un mouvement relatif de ladite partie de la ceinture (300) par rapport à ladite circonférence dudit premier corps (100) afin d'enlever ladite partie de la ceinture (300) de la tranchée (203).

10. Une méthode selon la revendication 9, dans laquelle:
- le premier corps (100) est un premier corps (100) segmenté dans la direction circonférentielle;
- ladite tranchée circonférentielle (203) est pourvue pour recevoir axialement ladite partie de la ceinture (300) afin de permettre une fixation radiale de ladite partie de la ceinture (300) par rapport audit deuxième corps (200); et
- ledit mouvement induit de ladite partie de la ceinture (300) est un mouvement axial afin d'enlever axialement ladite partie de ladite ceinture (300) de ladite tranchée (203).

11. Une méthode selon la revendication 9, dans laquelle:
- ladite tranchée circonférentielle (203) est à la première interface (101) pour recevoir radialement ladite partie de la ceinture (300) afin de permettre une fixation axiale de ladite partie de la ceinture (300) par rapport au deuxième corps (200); et
- le mouvement induit de ladite partie de la ceinture (300) est un mouvement radial afin d'enlever radialement ladite partie de ladite ceinture (300) de ladite tranchée (203).
